Europäisches Patentamt

European Patent Office

Office européen des brevets

(11) Publication number: **0 220 839
B1**

(12) **EUROPEAN PATENT SPECIFICATION**

(45) Date of publication of patent specification: **04.07.90**

(21) Application number: **86307426.6**

(22) Date of filing: **26.09.86**

(51) Int. Cl.⁵: **C 04 B 35/58,** F 16 C 33/04,
F 16 J 15/34

(54) Silicon nitride ceramics.

(30) Priority: **27.09.85 JP 213786/85**

(43) Date of publication of application:
**06.05.87 Bulletin 87/19**

(45) Publication of the grant of the patent:
**04.07.90 Bulletin 90/27**

(84) Designated Contracting States:
**DE FR GB NL**

(56) References cited:
**GB-A-1 274 229
US-A-4 469 801**

**JOURNAL OF MATERIALS SCIENCE LETTERS,
vol. 4, no. 2, February 1985, pages 195-196,
London, GB; C. GRESKOVICH et al: "Hardness of
dense alpha- and beta-Si3N4 ceramics"**

**CHEMICAL ABSTRACTS, vol. 99, no. 20, 14th
November 1983, page 275, abstract no. 162964p,
Columbus, Ohio, US; & JP-A-58 96 629
(TOSHIBA CORP.) 08-06-1983**

(73) Proprietor: **KABUSHIKI KAISHA TOSHIBA
72, Horikawa-cho Saiwai-ku
Kawasaki-shi Kanagawa-ken 210 (JP)**

(72) Inventor: **Ohta, Hiroyasu Patent Division
Kabushiki Kaisha Toshiba 1-1, Shibaura 1-chome
Minato-ku Tokyo (JP)**
Inventor: **Komatsu, Michiyasu Patent Division
Kabushiki Kaisha Toshiba 1-1, Shibaura 1-chome
Minato-ku Tokyo (JP)**
Inventor: **Miyano, Tadashi Patent Division
Kabushiki Kaisha Toshiba 1-1, Shibaura 1-chome
Minato-ku Tokyo (JP)**
Inventor: **Abe, Shigeo Patent Division
Kabushiki Kaisha Toshiba 1-1, Shibaura 1-chome
Minato-ku Tokyo (JP)**

(74) Representative: **Freed, Arthur Woolf et al
MARKS & CLERK 57-60 Lincoln's Inn Fields
London WC2A 3LS (GB)**

**Description**

Field of the Invention and Related Art Statement

This invention relates to silicon nitride ceramics of a controlled structural phase.

Ceramics using silicon nitride as a principal component thereof exhibit ample resistance to heat and high strength and low thermal expantion coefficients at elevated temperatures up to 1,900°C and, therefore, acquire qualities in resistance to thermal shock, resistance to abrasion, and resistance to corrosion. Thus, they are finding growing applications to various parts.

The silicon nitride ceramics assume varying structural phases, depending on method and conditions of their fabrication. Heretofore, it has been held that in order for the sintered ceramics to acquire ample increase of density and sufficient enhancement of strength, it is essential that the α-phase silicon nitride as a starting material should be completely converted into the β-phase silicon nitride during the course of sintering. For sliding members such as bearing parts, however, sintered ceramics which have been thoroughly converted into the β-phase silicon nitride do not always prove to be optimum materials, When a method is developed which permits production of sintered silicon nitride ceramics retaining part of the α-phase silicon nitride unaltered therein and exhibiting excellent properties, it will be also convenient from the standpoint of fabrication.

Object and Summary of the Invention

This invention has been produced in the light of the true state of affairs of the prior art described above. An object of this invention is to provide silicon nitride ceramics which are excellent in sliding properties and are easy to produce.

To be specific, this invention is directed to sintered silicon nitride ceramics which are characterized by having the α-phase silicon nitride and the β-phase silicon nitride intermingled therein and excelling in sliding properties.

For this invention, the proportion in which the α-phase silicon nitride is present in the sintered silicon nitride ceramics is desired to fall in the range of 5 to 15%. The powdered raw materials for the silicon nitride ceramics do not require very exact control of grain size or purity. The sintered silicon nitride ceramics of the present invention can be obtained by admixing powdered silicon nitride as a starting material with an amount in the range of 0.1 to 15% by weight of at least one rare earth-originating compound (oxide), for example such as yttrium oxide used as a sintering aid and subjecting the resulting mixture of hot press sintering under the conditions of 1,700 to 1,800°C and 29.4 to 49.0 MPa (300 to 500 kg/cm²). Additionally, aluminum oxide or aluminium nitride is added singly or multiply with an amount in the range of 0.1 to 15% by weight.

Detailed Description of Preferred Embodiment

Now, the present invention will be described below with reference to a working example.

Example:

Platen sintered silicon nitride ceramic samples were obtained by hot press sintering a powdered mixture, which consisted of 93% by weight of powdered α-phase silicon nitride (α-phase silicon nitride 99% in purity), 5% by weight of powdered yttrium oxide, and 2% by weight of powdered aluminum oxide at a fixed temperature of about 1,780°C under fixed pressure of 39.2 MPa (400 kg/cm²) for varying lengths of time ranging from 20 minutes to 4 hours. The proportions of the α-phase silicon nitride in the sintered samples and the magnitudes of resistance of the samples to abrasion are shown in Table 1. The proportions of the α-phase silicon nitride were determined by the X-ray diffraction and the magnitudes of resistance to abrasion were relatively rated with the magnitude obtained of a phase structure consisting solely (100%) of β-phase silicon nitride as 100.

# EP 0 220 839 B1

TABLE 1

| Proportion of α phase silicon nitride | Time for sintering at 1,780°C | Resistance to abrasion | Excessive grain growth | Despersion of deflective force (kg/mm²) |
|---|---|---|---|---|
| 0 | 4 hrs | 100 | yes | 60 ～ 110 |
| 2 | 3.5 ' | 100 | yes | 80 ～ 110 |
| 5 | 3 " | 100 | no | 90 ～ 110 |
| 10 | 2 ' | 95 | no | 90 ～ 110 |
| 15 | 1.5 ' | 95 | no | 90 ～ 110 |
| 20 | 1 ' | 90 | no | 80 ～ 100 |
| 30 | 20 mins | x | no | 70 ～ 90 |

The sintering conditions were about 1,780°C × 4 hours in the case of the sample whose proportion of the α-phase silicon nitride was 0% (β—100%) and 1,780°C × 20 minutes in the case of the sample whose proportion of the α-phase silicon nitride was 30%.

It is noted from Table 1 that the samples having the proportions of the α-phase silicon nitride below the level of 15% exhibited as high resistance to abrasion as the sample thoroughly converted to the β-phase and, what is more, enjoyed the following advantage.

To obtain through conversion of the α-phase to the β-phase, the sintering is required to be carried out at high temperatures for a long period of time. During the course of the sintering, therefore, the grains of ceramics are liable to attain excessive growth. The excessive grain growth brings about degradation of property such as dispersion of strength. To obtain silicon nitride throughly converted into the β-phase, therefore, the conditions of the powders as the raw materials (such as grain size) and the conditions of sintering are required to be controlled exactly. In the plant-level operation, this requirement is quite difficult to fulfil.

The sample containing absolutely no α-phase shown in Table 1 was observed to entail excessive grain growth such its grain diameter is not less than 5 μm. In contrast, the samples according with this invention required no rigid control of raw materials and were sufficiently sintered in short lengths of time to produce sintered ceramic showing no excessive grain growth.

The sintered silicon nitride ceramic having the α-phase silicon nitride and the β-phase silicon nitride admixed therein and produced by the present invention are excellent in sliding properties and easy to produce as described above. Thus, they are most suitable for use in bearing parts.

## Claims

1. A sintered silicon nitride ceramic article having an excellent combination of strength and sliding properties, said article consisting essentially of a silicon nitride crystal phase comprising 5 to 15% alpha-phase silicon nitride and the balance beta-phase silicon nitride with said alpha-phase and beta-phase intermingled in said article, 0.1 to 15% by weight of at least one rare earth element oxide and 0.1 to 15% by weight of at least one compound selected from the group consisting of aluminum oxide and aluminum nitride, said article being produced by mixing in powder form alpha-phase silicon nitride with said at least one rear earth element oxide and said at least one compound selected from the group consisting of aluminum oxide and aluminum nitride, and sintering the resultant mixture at a temperature of 1700 to 1800°C and a pressure of 29.4 to 49.0 MPa (300 to 500 kg/cm²) to retain in said article said 5 to 15% alpha-phase silicon nitride.

2. The article of claim 1 in the form of a bearing part.

3. The article of claim 1 or 2 having a grain diameter of less than 5 μm.

## Patentansprüche

1. Keramik-Gegenstand aus gesintertem Siliciumnitrid mit einer ausgezeichneten Kombination aus Festigkeit und Gleitvermogen, im wesentlichen bestehend aus einer Siliciumnitrid-Kristallphase, die 5 bis 15% α-Phasen-Siliciumnitrid und als Rest β-Phasen-Siliciumnitrid umfaßt, wobei die α-Phase und die β-Phase in dem Gegenstand miteinander vermengt vorliegen, 0,1 bis 15 Gew.-% wenigstens eines

3

Seltenerdelement-oxids und 0,1 bis 15 Gew.-% wenigstens einer Verbindung, die aus der aus Aluminiumoxid und Aluminiumnitrid bestehenden Gruppe ausgewählt ist, wobei der Gegenstand hergestellt wird durch Vermischen des α-Phasen-Siliciumnitrids in Pulverform mit dem wenigstens einen Seltenerdelementoxid und der wenigstens einen, aus der aus Aluminiumoxid und Aluminiumnitrid bestehenden Gruppe ausgewählten Verbindung und Sintern der resultierenden Mischung bei einer Temperatur von 1700°C bis 1800°C und einem Druck von 29,4 bis 49,0 MPa (300 bis 500 kg/cm²), um in dem Artikel die 5 bis 15% α-Phasen-Siliciumnitrid zurückzubehalten.

2. Gegenstand nach Anspruch 1 in Form eines Lager-Teils.

3. Gegenstand nach Anspruch 1 oder 2 mit einem Korn-Durchmesser von weniger als 5 µm.

**Revendications**

1. Article céramique en nitrure de silicium fritté, présentant une excellente combinaison de propriétés de résistance mécanique et de glissement, ledit article étant essentiellement constitué d'une phase de cristaux de nitrure de silicium comprenant de 5 à 15% de nitrure de silicium en phase alpha, le reste étant constitué de nitrure de silicium en phase bêta, ladite phase alpha et ladite phase bêta étant entremêlées dans ledit article, de 0,1 à 15% en poids d'au moins un oxyde des terres rares, et de 0,1 à 15% en poids d'au moins un composé choisi dans le groupe comprenant l'oxyde d'aluminium et le nitrure d'aluminium, ledit article étant produit par mélange, sous forme pulvérulente, de nitrure de silicium en phase alpha et d'au moins un oxyde des terres rares et dudit au moins un composé choisi dans le groupe comprenant l'oxyde d'aluminium et le nitrure d'aluminium, et frittage du mélange obtenu, à une température de 1700 à 1800°C et sous une pression de 29,4 à 49,0 MPa (300 à 500 kg/cm²), pour conserver dans ledit article lesdits 5 à 15% de nitrure de silicium en phase alpha.

2. Article selon la revendication 1, sous la forme d'un élément de palier.

3. Article selon la revendication 1 ou 2, ayant un diamètre de grain de moins de 5 µm.